# FASCICULE DE BREVET EUROPEEN

(11) **EP 1 904 591 B1**
(45) Date de publication et mention de la délivrance du brevet: **12.03.2014**
(21) Numéro de dépôt: 06777872.0
(22) Date de dépôt: 20.07.2006
(51) Int. Cl.: C09D 5/24, C09K 3/16, B64G 1/22, C09D 5/18

(54) **PROTECTION ELECTROSTATIQUE THERMIQUEMENT ISOLANTE**
ELEKTROSTATISCHER WÄRMEISOLIERENDER SCHUTZ
ELECTROSTATIC HEAT INSULATING PROTECTION

(30) Priorité: 21.07.2005 FR 0552261
(43) Date de publication de la demande: 02.04.2008
(73) Titulaire: Cryospace l'Air Liquide Aérospatiale, 78130 Les Mureaux (FR)
(72) Inventeur: CARGNELLO, Rémo, F-78130 Les Mureaux (FR); MARION, Yaël, F-78210 Saint Cyr L'école (FR)
(74) Mandataire: Ilgart, Jean-Christophe
(86) Numéro de dépôt international: PCT/EP2006/064478
(87) Numéro de publication internationale: WO 2007/010027

(56) Documents cités:
- EP-A- 0 487 366
- EP-A- 0 930 623
- EP-A- 1 696 014
- US-A- 5 015 413
- US-A- 5 350 594
- US-A1- 2003 141 417

## Description

### DOMAINE TECHNIQUE

La présente invention se rapporte à un revêtement permettant d'assurer une protection électrostatique d'une structure destinée à être soumise à des températures élevées. En particulier, l'invention se rapporte à un revêtement thermiquement isolant et antistatique.

Plus précisément, l'invention se rapporte à une composition antistatique thermiquement isolante comprenant une charge homogène de plusieurs composés minéraux incorporée dans un élastomère silicone et un revêtement thermiquement isolant de protection électrostatique obtenu à partir de cette composition.

Une application privilégiée de l'invention concerne la production d'un revêtement thermiquement isolant pour la protection électrostatique de matériaux électriquement non conducteurs utilisés dans les domaines aéronautique et spatial, le revêtement étant destiné à protéger des structures soumises à des flux aérothermiques.

### ÉTAT DE LA TECHNIQUE ANTÉRIEURE

L'utilisation de matériaux diélectriques tels que les composites ou les plastiques favorise l'accumulation de charges électrostatiques en surface de ces matériaux par effet triboélectrique. L'effet triboélectrique est un phénomène d'électricité statique courant, qui se produit lorsque deux corps différemment chargés entrent en contact. Lorsque la quantité de charges électrostatiques accumulées est trop importante, un rééquilibrage brutal des charges apparaît alors, provoquant une décharge électrique. Or les décharges électriques peuvent endommager les appareils électriques et les utilisateurs de ces appareils. De plus, les décharges électriques peuvent générer des perturbations électromagnétiques qui sont susceptibles de provoquer un dysfonctionnement de ces appareils et d'appareils situés à proximité, comme par exemple un instrument de navigation dans un avion.

Il est donc important de prendre en compte cet effet triboélectrique, notamment lors de la fabrication d'engins aériens ou spatiaux, où le moindre dysfonctionnement d'un appareil peut avoir des conséquences dramatiques.

Pour éviter l'accumulation de charges en surface des appareils et l'apparition de décharges électriques, la surface externe des appareils est munie d'un revêtement de protection électrostatique qui doit assurer, d'une part, l'écoulement des charges électrostatiques accumulées sans créer d'interférences électromagnétiques et, d'autre part, une équipotentialité de surface quels que soient les matériaux sous-jacents.

Les revêtements permettant l'évacuation des charges électrostatiques en surface d'un support s'obtiennent avec une résistance surfacique (Rₛ) adéquate. Cette résistivité, en régulant la vitesse d'écoulement des charges en surface, évite les accumulations électriques, et par conséquent, les décharges à haute tension capables de détériorer divers équipements. Dans le cas particulier des engins spatiaux, par exemple pour le lanceur ARIANE V, il est nécessaire d'utiliser un revêtement ayant une résistivité surfacique comprise entre 10⁵ et 10⁹ Ω/carré et dont la résistivité surfacique est capable de se maintenir dans cette fourchette jusqu'à une altitude de 15 km après le décollage du lanceur.

Cette contrainte sur l'altitude engendre deux autres contraintes en vol, dont il faut tenir compte :
- une contrainte thermique, car il y a une augmentation de la température de la surface externe du lanceur au cours de sa montée en altitude, qui peut atteindre plus de 100°C,
- une contrainte de pression, cette dernière chutant en effet jusqu'à atteindre une valeur de 120 mbar absolus.

Actuellement, pour obtenir une résistivité surfacique comprise entre 10⁵ et 10⁹ Ω/carré, on utilise des peintures polyuréthanes formulées spécialement pour l'industrie spatiale et dont la fonctionnalité antistatique est assurée principalement par une charge antistatique composée de dioxyde de titane. Mais en dépit de leurs bonnes caractéristiques électriques, ces peintures présentent des inconvénients.

D'une part, leurs caractéristiques électriques se dégradent sous la chaleur provoquée par la bouffée chaude (présentant une température instantanée d'environ 400°C) due à la remontée des jets des propulseurs à poudre. Cette bouffée chaude affecte différentes pièces du lanceur, comme le bâti-moteur et le réservoir cryotechnique sur une hauteur d'environ 10 mètres, ainsi que la partie basse des propulseurs à poudre. La résistance de surface après cette agression thermique est comprise entre 12 et 15 GΩ/carré, et n'est plus comprise dans l'intervalle de valeurs requis. Plus particulièrement, les peintures polyuréthanes servant de revêtements antistatiques sont dites « hors tolérance », c'est-à-dire hors de l'intervalle de 10⁵ à 10⁹ Ω/carré, à partir d'une température de 180-200°C et se carbonisent à partir de 300°C. Ainsi, pour le bâti-moteur, qui est soumis à des flux thermiques importants dès la mise à feu, la dégradation de la résistance de surface des revêtements antistatiques est rapide et la résistance surfacique des revêtements devient rapidement hors tolérance et ne joue plus son rôle de protection.

D'autre part, comme on l'a vu plus haut, un processus de carbonisation du revêtement antistatique se produit également sous l'effet de la chaleur. Ce processus de carbonisation peut être favorable à la protection antistatique d'un matériau. En effet, la carbonisation d'un matériau peut assurer l'écoulement correct des charges à la surface de ce matériau. Dans le cas présent, la carbonisation est avantageuse à condition que le revêtement antistatique qui se carbonise soit adhérent aux matériaux électriquement non conducteurs qu'il protège, ou, si le revêtement antistatique carbonisé n'adhère pas au support, que le support, qui n'est plus protégé, soit également carbonisé en surface. Or, compte tenu des efforts aérodynamiques rencontrés en vol, il est peu probable qu'un revêtement antistatique carbonisé reste adhérent au support qu'il protège jusqu'à une altitude de 15 km.

Par ailleurs, pour protéger une structure d'une attaque thermique, on la recouvre d'un matériau thermiquement isolant qui est généralement un matériau formé d'un liant élastomère à base de silicone et chargé en silice. Un tel matériau est bien adapté à la protection thermique des structures spatiales, mais n'assure pas le rôle de protection antistatique. Comme pour les autres matériaux utilisés, il faut donc également recouvrir les protections thermiques d'une protection antistatique, en l'occurrence avec une peinture en polyuréthane. Or les peintures en polyuréthane sont incompatibles avec les bases silicones. En effet, les adhérences des peintures antistatiques en polyuréthane sur des matériaux à base de silicone sont juste suffisantes. Dès leur carbonisation, en général vers 300°C, les peintures antistatiques en polyuréthane n'adhèrent plus au support au moindre effort, laissant apparaître les protections thermiques sous-jacentes pratiquement intactes (non carbonisées) qui résistent en surface à l'écoulement de charges de l'ordre de plusieurs dizaines de giga Ohms (GΩ).

On peut choisir de limiter le dépôt des protections thermiques uniquement sur les parties d'une structure (par exemple un lanceur) les plus soumises à la bouffée chaude et aux flux thermiques importants dès la mise à feu, et recouvrir ensuite l'ensemble de la structure d'un revêtement antistatique. Cependant, cette façon de procéder ne résout pas le problème de l'incompatibilité de la protection thermique et de la protection antistatique au niveau des parties protégées thermiquement.

On peut également choisir d'augmenter l'épaisseur de la peinture antistatique déposée sur le matériau thermiquement isolant. Mais il se trouve que l'adhérence de la couche de peinture antistatique diminue en fonction de l'augmentation de poids de la couche de revêtement antistatique, ce qui a pour conséquence de provoquer un décollement prématuré du revêtement antistatique sur l'isolation thermique, bien avant la fin de l'agression thermique dont on désire protéger la structure. De plus, la solution consistant à augmenter l'épaisseur de la couche de peinture antistatique aurait pour conséquence d'amener un surcroît de masse à la structure à protéger, ce qui est difficilement acceptable dans le domaine spatial.

A titre d'illustration, EP 0 487 366 décrit des peintures blanches à base d'un pigment semiconducteur oxyde d'étain/dioxyde de titane dopé à l'oxyde d'antimoine permettant de former un revêtement blanc anti-statique et radiotransparent sur des antennes de satellites, et assurant en même temps le contrôle thermique de ces antennes.

### EXPOSÉ DE L'INVENTION

Un objet de l'invention est donc de fournir des compositions qui permettent de réaliser des revêtements thermiquement isolants de protection électrostatique satisfaisant aux spécifications de résistivité surfacique en usage dans l'industrie spatiale, et notamment pour les lanceurs spatiaux, tout en étant exemptes des inconvénients présentés par les peintures antistatiques utilisées actuellement. En d'autres termes, un objectif de l'invention est de fournir un revêtement antistatique thermiquement isolant capable de conserver ces exigences de résistivité surfacique dans une plage de mesure comprise entre 10⁵ et 10⁹Ω/carré, surtout après une agression thermique temporaire de plusieurs centaines de degrés Celsius, notamment une agression thermique à une température supérieure à 300°C, que l'on rencontre par exemple au moment du décollage d'un lanceur. En particulier, il est souhaitable que les protections thermiques chaudes utilisées contre les flux aérothermiques et exposées à de fortes températures avant que le lanceur ait atteint 15 km d'altitude, puissent être protégées correctement pour garantir l'écoulement des charges électrostatiques.

L'invention concerne donc une composition antistatique thermiquement isolante comprenant un élastomère silicone, une charge antistatique comprenant au moins deux composés minéraux de densités différentes, au moins un des composés minéraux étant électriquement conducteur et les autres composés minéraux permettant d'ajuster la résistivité surfacique de la composition à une valeur déterminée, et un agent d'homogénéisation permettant d'homogénéiser la répartition des au moins deux composés minéraux au sein de la charge antistatique, caractérisée en ce que la charge antistatique comprend 14 parties en poids (+ ou - 3%) d'un premier composé minéral et 16 parties en poids (+ ou - 3%) d'un second composé minéral mélangées de manière homogène dans 20 parties (+ ou - 3%) en poids de l'agent d'homogénéisation et en ce que les premier et second composés minéraux sont choisis parmi les oxydes d'étain, les oxydes d'antimoine et leurs mélanges.

L'invention concerne aussi une composition antistatique thermiquement isolante comprenant un élastomère silicone, une charge antistatique comprenant au moins deux composés minéraux de densités différentes, au moins un des composés minéraux étant électriquement conducteur et les autres composés minéraux permettant d'ajuster la résistivité surfacique de la composition à une valeur déterminée, et un agent d'homogénéisation permettant d'homogénéiser la répartition des au moins deux composés minéraux au sein de la charge antistatique, caractérisée en ce que la charge antistatique comprend 140 parties en poids (+ ou - 3%) d'un premier composé minéral et 100 parties en poids (+ ou - 3%) d'un second composé minéral mélangées de manière homogène dans 350 parties en poids (+ ou - 3%) de l'agent d'homogénéisation et en ce que les premier et second composés minéraux sont choisis parmi les oxydes d'étain, les oxydes d'antimoine et leurs mélanges.

Les composés minéraux au sein de la charge antistatique ont pour fonction d'assurer l'écoulement des charges électrostatiques de la composition dans laquelle ils se trouvent. Selon les composés minéraux choisis, l'ajout de ces composés peut permettre d'augmenter les performances réfractaires et/ou abaisser la densité de la composition antistatique thermiquement isolante.

Cette combinaison d'un élastomère silicone et d'une charge antistatique comprenant au moins deux composés minéraux de densités différentes répartis de manière homogène selon l'invention permet d'obtenir un matériau thermiquement isolant et électriquement conducteur à l'écoulement des charges électrostatiques.

Par exemple, si les composés minéraux sont au nombre de deux, le premier composé minéral peut être électriquement conducteur et avoir une résistivité R₁, et le second composé minéral avoir une résistivité R₂, la proportion du premier composé par rapport au second composé étant déterminée de manière à obtenir une résistance surfacique Rₛ donnée.

Le mélange est réalisé de manière à ce qu'on obtienne une pâte homogène de charge antistatique. L'oxyde d'antimoine peut être par exemple de l'oxyde d'antimoine de référence ZELEC® 1610-S et l'oxyde d'étain peut être par exemple de l'oxyde d'étain SUPERLITE.

Le fabricant donne les caractéristiques suivantes pour le ZELEC® 1610-S :
Noyau : enveloppe creuse de silice,
Couleur : gris clair,
DPR : 2 à 25 ohm.cm,
Masse volumique après tassement : 0,4 g/cc,
Poids spécifique : 4 g/cc,
Surface : 30 à 60 m²/g,
Absorption d'huile : 210 g d'huile pour 100 g de produit,
Taille de particule (d₅₀) : 3 µm.

Avantageusement, le premier composé minéral est de l'oxyde d'étain et le second composé minéral est de l'oxyde d'antimoine.

Avantageusement, l'agent d'homogénéisation est de l'eau (liquide).

Avantageusement, l'élastomère silicone est monocomposant et vulcanisant à température ambiante. On entend par température ambiante une température comprise environ entre 18 et 24°C. L'élastomère silicone peut être l'élastomère silicone de référence CAF730 ; cet élastomère silicone est monocomposant et vulcanise à température ambiante, et permet d'augmenter les performances réfractaires et la tenue en température de la composition antistatique. Le choix de l'élastomère silicone est dicté principalement par ses qualités de facilité de mise en oeuvre (malaxage, polymérisation à température ambiante, viscosité, ...). L'élastomère silicone est en outre choisi de façon à être compatible avec le support qu'il doit recouvrir et protéger, en l'occurrence les protections thermiques, afin de garantir une excellente adhérence, ainsi qu'une résistance mécanique et une tenue au vieillissement particulièrement élevées. Enfin, l'élastomère est choisi pour ses qualités de tenue aux températures élevées.

De préférence, l'élastomère est de type mono composant, c'est-à-dire qu'il comprend une base sans durcisseur et est destiné à être mélangé juste avant emploi à la charge antistatique.

Avantageusement, l'agent d'homogénéisation représente environ un quart du poids de la composition.

Avantageusement, la composition antistatique thermiquement isolante comprend 100 parties en poids (+ 1% ou - 3%) de l'élastomère silicone et 100 parties en poids (+ ou - 3%) de la charge antistatique.

Selon une variante, la composition comprend en outre un diluant apte à diminuer la viscosité de la composition. Le diluant est utilisé pour abaisser la viscosité de la composition, par exemple pour la rendre pulvérisable. En effet, cette composition antistatique thermiquement isolante est destinée à réaliser un revêtement ; elle peut donc également avoir besoin d'être fluidifiée pour être plus facilement applicable.

Avantageusement, le diluant est du n-heptane.

L'invention concerne aussi un revêtement thermiquement isolant de protection électrostatique, caractérisé en ce qu'il est obtenu par application et séchage sur un support d'au moins une couche de la composition telle que définie ci-dessus.

Avantageusement, le revêtement thermiquement isolant de protection antistatique présente une résistivité surfacique comprise entre 10⁵ et 10⁹ Ω/carrés.

Le choix des composés minéraux et leurs proportions au sein de la charge antistatique sont déterminés de manière à conférer au revêtement antistatique thermiquement isolant une résistivité surfacique déterminée, de préférence comprise dans l'intervalle de 10⁵ à 10⁹ Ω/carrés.

L'épaisseur du revêtement est choisie en fonction du degré de protection thermique désiré, c'est-à-dire selon que les zones sur lesquelles il va être déposé sont des zones plus ou moins soumises à la chaleur. De préférence, le revêtement a une épaisseur d'au moins 3 millimètres.

Avantageusement, le revêtement thermiquement isolant de protection antistatique se carbonise à des températures proches des températures de début de carbonisation du support qu'il recouvre. La température de début de carbonisation du revêtement est au minimum équivalente à la température de début de carbonisation du support qu'il recouvre ou légèrement supérieure. Ainsi, comme le revêtement antistatique thermiquement isolant se carbonise à des températures très proches des températures de début de carbonisation du support qu'il recouvre (par exemple un support servant de protection thermique), le revêtement protége le support contre les décharges électriques jusqu'à une certaine température correspondant à la température de carbonisation du revêtement, puis au dessus de cette température, le revêtement subit une carbonisation de même que le support, la carbonisation du support assurant à son tour les caractéristiques électriques nécessaires à l'écoulement des charges électrostatiques, même lorsque le revêtement est détruit. De ce fait, la carbonisation du revêtement antistatique aux températures élevées, même si elle provoque la dégradation du revêtement, assure l'écoulement correct des charges à la surface du support. On a ainsi un revêtement qui assure, d'une part, une protection thermique, et d'autre part, une protection antistatique capable de tenir temporairement à de hautes températures.

L'invention concerne également l'utilisation du revêtement tel que décrit précédemment sur la surface d'une structure destinée à être soumise à une agression thermique, de manière à faciliter l'écoulement des charges électrostatiques sur la surface de ladite structure.

L'invention concerne aussi les procédés de réalisation de la charge antistatique contenue dans la composition antistatique thermiquement isolante, de la composition antistatique thermiquement isolante et du revêtement ci-dessus mentionnés.

Le procédé de réalisation d'une charge antistatique apte à écouler des charges électriques et destiné à être incorporé dans un élastomère silicone, pour former une composition antistatique thermiquement isolante selon l'invention, comprend une étape de mélange homogène d'au moins deux composés minéraux de densités différentes dans des proportions déterminées, au moins un desdits composés minéraux étant électriquement conducteur, le mélange étant effectué dans un agent d'homogénéisation apte à disperser de manière homogène lesdits au moins deux composés minéraux au sein de la charge antistatique.

Comme les composés minéraux sont de densités différentes, la présence de l'agent d'homogénéisation est importante pour obtenir une charge antistatique homogène. Lors de la réalisation de la charge antistatique, les composés minéraux (qui sont généralement sous forme de poudre) sont absorbés aussitôt par l'agent d'homogénéisation, ce qui évite leur dispersion dans l'atmosphère, et sont bien dosés, ce qui évite que les composés ne précipitent dans l'agent d'homogénéisation, ce qui se traduirait par une dispersion des valeurs de résistivité à la surface du revêtement antistatique obtenu au final. C'est le dosage de ces différents composés minéraux qui va permettre d'obtenir un revêtement antistatique selon l'invention avec une valeur de résistivité surfacique comprise entre 10⁵ à 10⁹ Ω/carré.

Avantageusement, les composés minéraux sont choisis parmi les oxydes d'étain, les oxydes d'antimoine et leurs mélanges.

Avantageusement, l'agent d'homogénéisation est de l'eau.

Le procédé de réalisation d'une composition thermiquement isolante pour revêtement antistatique selon l'invention comprend les étapes suivantes :
- formation d'au moins une charge antistatique telle que décrite ci-dessus,
- incorporation de manière homogène de ladite au moins une charge antistatique formée dans un élastomère silicone.

Selon la quantité de charge antistatique ajoutée à l'élastomère, on obtiendra un matériau de revêtement antistatique thermiquement isolant de résistivité donnée. En variant la proportion de charge antistatique par rapport à la quantité d'élastomère, on peut ajuster la résistivité surfacique des revêtements destinés à être obtenus à partir de cette composition à la valeur désirée.

Avantageusement, l'élastomère silicone est monocomposant et vulcanisant à température ambiante.

Le procédé de réalisation d'un revêtement thermiquement isolant de protection antistatique sur un support selon l'invention comprend les étapes suivantes :
- application d'au moins une couche d'une composition thermiquement isolante pour revêtement antistatique sur la surface du support à protéger, ladite composition étant réalisée selon le procédé de réalisation ci-dessus,
- séchage de ladite au moins une couche.

De préférence, l'application de ladite au moins une couche sur le support et/ou le séchage de ladite au moins une couche est effectuée à température ambiante et sous une hygrométrie relative inférieure à 60%. On entend par température ambiante une température comprise environ entre 18 et 24°C.

Selon une variante, le procédé de réalisation d'un revêtement thermiquement isolant de protection antistatique sur un support comprend en outre, avant l'étape d'application, une étape d'ajout d'un diluant dans la composition de manière à abaisser la viscosité de la composition et faciliter son application sur le support. Le diluant est utilisé par exemple pour permettre de projeter la composition sur le support. Le diluant peut être un solvant. De préférence, le diluant est le n-heptane.

Avantageusement, le support est en un matériau électriquement non conducteur. Il peut être en un matériau diélectrique composite ou plastique.

De préférence, le support est en un élastomère silicone. Le support peut par exemple être en un matériau formé d'un liant élastomère à base de silicone, chargé en silice et servir de protection thermique pour une structure, par exemple une structure spatiale destinée à subir des flux exothermiques lors de son lancement.

En conclusion, le fait d'inclure dans un élastomère silicone et dans des proportions convenablement choisies, une charge antistatique, élaborée à partir de plusieurs composés minéraux répartis de manière homogène dans la charge antistatique grâce à un agent d'homogénéisation selon l'invention, permet de conférer au revêtement résultant de l'application et du séchage de cette composition sur un support, une résistivité surfacique déterminée. De préférence, cette résistivité surfacique déterminée est comprise dans la plage des valeurs de résistivité surfacique auxquelles doivent satisfaire les revêtements de protection électrostatique des lanceurs spatiaux, et qui se maintient dans cette plage lorsque lesdits revêtements sont soumis à une température supérieure à 350°C, une hygrométrie relative de 0 à 90% et une pression comprise entre la pression atmosphérique (1 bar) et 120 mbar absolus. L'avantage de ce revêtement est qu'il possède les propriétés ci-dessus mentionnées même sur un support élaboré avec des élastomères silicones, ce qui est le cas pour la plupart des protections thermiques généralement utilisées.

L'avantage du revêtement antistatique thermiquement isolant selon l'invention est qu'il peut présenter à la fois une résistivité de surface comprise entre 10⁵ et 10⁹Ω/carré, une tenue en température élevée, de bonnes caractéristiques mécaniques de souplesse et de résistance a la rupture, une excellente adhérence sur protections thermiques à base d'élastomère silicone et une bonne tenue au vieillissement. En particulier, le revêtement selon l'invention peut être utilisé pour rendre antistatiques des protections chaudes formulées avec des liants d'élastomères silicones et utilisées dans les zones à forte agression thermique, par exemple sur les protubérances, les zones subissant des bouffées chaudes et des flux thermiques importants dès la mise à feu sur les fusées de lancement.

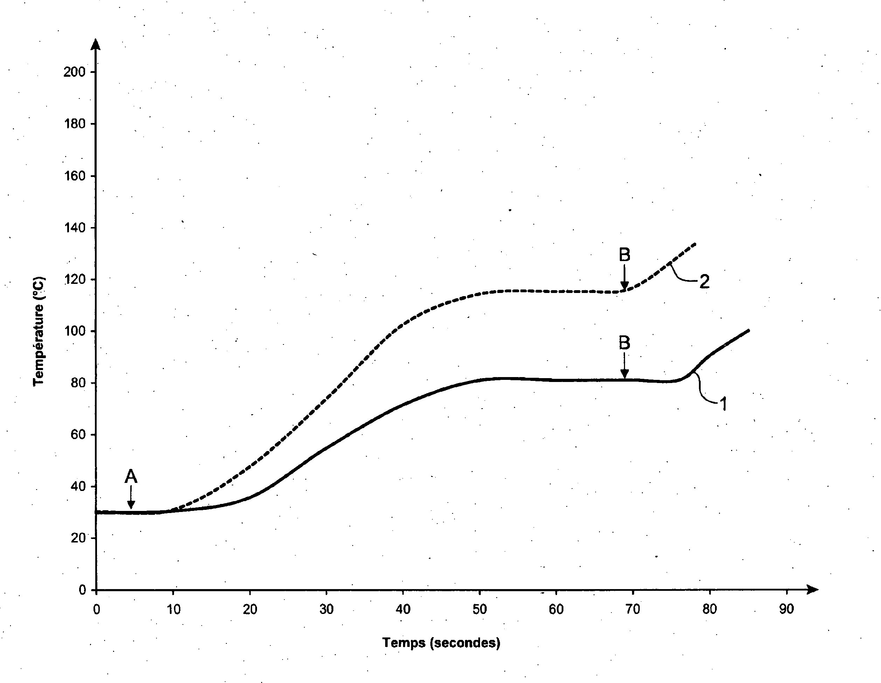

### BRÈVE DESCRIPTION DU DESSIN

L'invention sera mieux comprise et d'autres avantages et particularités apparaîtront à la lecture de la description qui va suivre, donnée à titre d'exemple non limitatif, accompagnée de la figure, qui représente l'évolution de la température (en degré C°) en fonction du temps (en seconde), à l'interface entre une couche de revêtement selon l'invention et un support isolant subissant une attaque thermique.

### EXPOSÉ DÉTAILLÉ DE MODES DE RÉALISATION PARTICULIERS

Nous allons à présent détailler le mode de réalisation d'un revêtement antistatique thermiquement isolant selon l'invention.

On commence tout d'abord par réaliser la charge antistatique. La charge antistatique comprend au moins deux composés minéraux de densités différentes. C'est le dosage de ces différents composés minéraux qui va permettre d'obtenir un revêtement antistatique thermiquement isolant et ayant une valeur de résistivité surfacique comprise de préférence entre 10⁵ à 10⁹ Ω/carré. Par exemple, la charge antistatique peut être obtenue en mélangeant deux composés minéraux incorporés dans une certaine quantité d'un agent d'homogénéisation de manière à former une pâte homogène ; le premier composé minéral peut être de faible densité et électriquement conducteur, et le deuxième composé minéral est là pour permettre d'ajuster la résistivité de la charge antistatique obtenue au final. Dans notre exemple, on mélange de manière homogène 140 parties en poids (+ ou - 3%) d'oxyde d'étain et 100 parties en poids (+ ou - 3%) d'oxyde d'antimoine dans 350 parties en poids (+ ou - 3%) d'eau (agent d'homogénéisation). On peut par exemple choisir d'utiliser l'oxyde d'antimoine commercialisée par la Société MILLIKEN sous la référence ZELEC® 1610-S et l'oxyde d'étain référencé SUPERLITE®.

L'utilisation d'un agent d'homogénéisation, par exemple l'eau, pour réaliser la charge antistatique est importante car il permet d'obtenir un mélange homogène de composés minéraux de densités différentes. Ainsi, la proportion des composés minéraux est choisie en fonction de la résistivité de surface que l'on veut obtenir pour la composition antistatique thermiquement isolante, mais c'est la présence de l'agent d'homogénéisation qui permet d'obtenir un équilibre et un bon dosage des composés minéraux au sein de la composition, et qui permet ainsi d'obtenir une pâte homogène qui présente une résistivité de surface homogène.

La préparation de la composition antistatique thermiquement isolante est ensuite obtenue an mélangeant de manière homogène la charge antistatique formée précédemment avec un élastomère silicone. Selon la quantité de charge antistatique ajoutée à l'élastomère silicone, on obtiendra une composition avec une résistivité surfacique déterminée. En effet, en variant la proportion de charge antistatique par rapport à la quantité d'élastomère, on peut ajuster la résistivité surfacique de la composition pour obtenir un revêtement antistatique avec la résistivité surfacique désirée.

Comme la charge antistatique est sous forme de pâte homogène, elle se répartit correctement dans l'élastomère lors du mélange et permet d'obtenir une composition avec une résistivité surfacique homogène. Plus précisément, comme les composés minéraux sont dispersés de manière homogène dans la charge antistatique et que la charge antistatique se mélange de manière homogène avec l'élastomère, alors les composés minéraux se répartissent également correctement dans l'élastomère pour former une composition antistatique de résistivité surfacique homogène.

Pour obtenir une composition antistatique thermiquement isolante ayant une résistivité de surface comprise dans la plage de valeurs très restreinte de 10⁵ à 10⁹ Ω/carré, on introduit par exemple 100 parties en poids (+ 1% ou -3%) d'élastomère silicone, par exemple l'élastomère silicone de référence CAF730 de chez Rhodia, dans 100 parties en poids (+ ou - 3%) de la charge antistatique déjà formée et on mélange cet ensemble jusqu'à obtenir un mélange homogène. L'élastomère silicone est un liant ; son incorporation dans la composition permet donc d'obtenir une composition qui donnera un revêtement ayant une bonne adhérence sur un support. L'élastomère silicone est donc choisi en fonction du support sur lequel on désire appliquer le revêtement. Dans cet exemple, comme on veut protéger des structures présentant des couches de protection thermiques en silicone, on choisit donc d'incorporer un élastomère silicone qui ait une bonne adhérence sur les composés siliconés.

De préférence, l'élastomère silicone est de type monocomposant, c'est-à-dire qu'il comprend une base sans durcisseur. Dans ce cas, l'élastomère sera mélangé à la charge antistatique juste avant emploi, car le produit une fois mélangé devra être utilisé rapidement (temps de durée de vie en pot limité).

La composition ainsi réalisée n'a plus qu'à être appliquée sur le support (par exemple une protection thermique) que l'on veut protéger. La composition permet de réaliser des revêtements de protection électrostatique, destiné à protéger des protections thermiques soumises à des agressions thermiques transitoires. La composition selon l'invention peut être par exemple utilisée pour réaliser des revêtements de protection antistatique pour l'industrie spatiale, l'industrie aéronautique, l'industrie pétrolière ou l'industrie chimique, où de nombreux dispositifs doivent être protégés des décharges électrostatiques et subissent des agressions thermiques.

De préférence, la composition est appliquée sur le support à protéger à température ambiante et sous une hygrométrie relative inférieure à 60%. Ces restrictions sont fonction des caractéristiques des matériaux formant la composition et des caractéristiques de mise en oeuvre de la composition de manière à maximiser la durée de vie en pot de la composition. Par exemple, si l'hygrométrie relative est supérieure à 60%, il y a un risque que la composition se polymérise, car il y a trop d'eau. De même, le séchage de la composition ainsi appliquée est, de préférence, lui aussi effectué à température ambiante et sous une hygrométrie relative inférieure à 60%.

Pour faciliter l'application de la composition sur le support, on peut éventuellement ajouter un diluant à la composition, par exemple pour faciliter l'application par pulvérisation de la composition. Dans notre exemple, on verse 70 parties en poids de n-heptane dans la composition afin de diminuer la viscosité du mélange. Cet ensemble est bien mélangé. La composition est alors prête à être appliquée.

Un autre exemple non restrictif de réalisation d'un revêtement antistatique thermiquement isolant selon l'invention est décrit ci-dessus. Ce revêtement antistatique thermiquement isolant va être utilisé pour faire des mesures de test de la résistivité en fonction de la température.

On mélange 14 parties en poids (+ ou - 3%) d'oxyde d'antimoine, par exemple de référence ZELEC®1610-S, 16 parties en poids (+ ou - 3%) d'oxyde d'étain, par exemple du SUPERLITE, avec 20 parties en poids (+ ou - 3%) d'eau (eau courante du robinet) pour obtenir une pâte homogène de charge antistatique.

Cette pâte homogène est ensuite mélangée à 50 parties en poids (+ 1% ou - 3%) d'élastomère silicone, par exemple de l'élastomère de référence CAF730. Le mélange est polymérisé à température ambiante.

Dans l'exemple considéré, le matériau ainsi fabriqué est ensuite dilué avec du n-heptane afin d'abaisser sa viscosité pour le rendre pulvérisable, puis est projeté sur un support en élastomère silicone représentant une protection thermique. Le revêtement antistatique est déposé sur le support selon une épaisseur de l'ordre de 120 micromètres.

On obtient donc au final un support protégé par un revêtement antistatique qui assure, d'une part, l'écoulement des charges électrostatiques accumulées sans créer d'interférences électromagnétiques et, d'autre part, une équipotentialité de surface, quels que soient les matériaux sous-jacents au revêtement, due à la valeur de la résistivité de surface (comprise entre 10⁵ à 10⁹ Ω/carré).

Conformément à l'invention, il n'est pas nécessaire, avec la composition telle que préparée selon l'invention, d'enduire préalablement le support d'une sous-couche d'accrochage destinée à augmenter l'adhérence du revêtement antistatique sur le support. En effet, le choix de l'élastomère silicone est fait de sorte que l'adhérence du revêtement sur le support soit correcte. On évite ainsi un des désavantages de ces sous-couches qui ont généralement pour conséquence de retarder le transfert de chaleur par conduction vers le support à protéger, et d'empêcher ainsi le support de devenir électriquement conducteur et antistatique.

Le revêtement antistatique thermiquement isolant obtenu selon l'invention subit ensuite différents essais pour déterminer sa résistivité surfacique en fonction de la température. Plusieurs échantillons identiques sont réalisés et comprennent le revêtement ci-dessus déposé sur le support en élastomère silicone. La résistivité surfacique (Rₛ) du revêtement est mesurée au moyen d'un mégohmmètre SEFELEC M500 muni d'électrodes en cuivre et sous une tension de mesure de 500 volts continus. Chaque échantillon va subir une attaque thermique à une température déterminée et leur résistivité surfacique est mesurée. Pour procéder aux mesures, une sonde de température est placée à la surface de chaque échantillon, afin de surveiller l'évolution de la température lorsqu'ils sont soumis à une agression thermique contrôlée. L'agression thermique est délivrée par une étuve.

Le revêtement antistatique thermiquement isolant obtenu présente une résistance surfacique de 20 à 200 MΩ/carré, valeur qui est bien comprise entre 10⁵ à 10⁹ Ω/carré, une résistance à la rupture de l'ordre de 1 MPa et une très grande souplesse permettant notamment d'effectuer un pliage du revêtement à 180° sans rupture. La densité du revêtement est proche de 1 et sa durée de vie en pot (« pot-life » en anglais) est d'environ 1 heure 30 minutes à température ambiante (c'est-à-dire entre 18 et 24°C), et sous une hygrométrie relative inférieure à 60°C.

Les résultats des tests montrent que le revêtement obtenu à partir d'un élastomère silicone, d'oxyde d'étain et d'oxyde d'antimoine dans les proportions ci-dessus présente, même lorsqu'il est porté à des températures supérieures à 350°C, une résistivité surfacique comprise dans la gamme de valeurs 10⁵ à 10⁹ Ω/carré. Ce revêtement peut donc être utilisé par exemple pour la protection antistatique du lanceur ARIANE V.

Nous avons comparé la résistance thermique d'un revêtement 1 selon l'invention et d'un revêtement de protection thermique connu 2 (décrit dans le brevet FR 2 732 688). Les deux revêtements ont été déposés sur un support isolant selon une couche ayant une épaisseur de 4 mm.

Pour le support isolant, on utilise une structure cellulaire en mousse isolante à base de polychlorure de vinyle.

Pour réaliser le revêtement de protection thermique connu, on a mélangé les constituants suivants :
- élastomère silicone : 50 à 80 parties en poids,
- lévilite : 10 à 25 parties en poids,
- agent de solubilité : 18 à 45 parties en poids dont H₂O (15 à 25 parties en poids), (CoCl₂, 6 H₂O) (2 à 10 parties en poids), (Na₂SO₄, 10 H₂O) (1 à 10 parties en poids). Le mélange a été polymérisé à température ambiante.

Pour le revêtement selon l'invention, on a utilisé la composition déjà décrite précédemment, qui comprend 14 parties en poids (+ ou - 3%) d'oxyde d'antimoine (par exemple de référence ZELEC®1610-S), 16 parties en poids (+ ou - 3%) d'oxyde d'étain (par exemple du SUPERLITE), avec 20 parties en poids (+ ou - 3%) d'eau (eau courante du robinet), la pâte homogène ainsi obtenue étant ensuite mélangée à 50 parties en poids (+ 1% ou - 3%) d'élastomère silicone (par exemple de l'élastomère de référence CAF730).

La courbe de la figure représente l'évolution de la température (en degré °C) en fonction du temps (en seconde) à l'interface de la couche de revêtement et du support isolant lorsque l'empilement est chauffé au chalumeau à une distance représentant un flux étalonné de 200 kW/m² pendant environ 60 secondes. La flèche A indique le début de l'agression thermique de l'empilement et les flèches B indiquent la fin de l'agression au chalumeau. On observe que le revêtement 1 selon l'invention présente, tout au long de l'attaque thermique, une température à l'interface moins élevée que pour le revêtement connu. On voit en effet que pour le revêtement 1 selon l'invention, la température T atteinte à l'interface avec le support isolant était d'environ 80°C après environ 60 secondes de chauffage, alors qu'elle était d'environ 117°C pour le revêtement thermique connu après la même période de chauffage. Le revêtement selon l'invention offre donc une protection thermique plus performante que le revêtement connu.

Ce résultat est étonnant vu que le revêtement selon l'invention est antistatique et est donc électriquement conducteur. On obtient donc un revêtement qui est non seulement antistatique, mais présente également une protection thermique améliorée. Ainsi, on peut déposer une couche de revêtement selon l'invention sur une couche de protection thermique, mais on peut également, en augmentant l'épaisseur de cette couche de revêtement, se contenter de déposer cette couche directement sur le support à protéger contre la chaleur et les décharges antistatiques, sans avoir à déposer au préalable une couche de protection thermique.

Les essais qui viennent d'être décrits confirment que le matériau antistatique thermiquement isolant selon l'invention est apte à résister à une agression thermique transitoire (1 à 2 minutes), matérialisée par un flux thermique pouvant atteindre au moins environ 200 kW/m². Dans ces conditions, lorsque le matériau est utilisé comme revêtement de protection thermique sur une structure, la température de l'interface peut être maintenue en permanence en dessous de 150°C, quelle que soit la nature de la structure, c'est-à-dire aussi bien s'il s'agit d'une structure thermiquement conductrice telle qu'une structure métallique ou en matériau composite, que s'il s'agit d'une structure thermiquement isolante telle qu'une structure cellulaire en mousse isolante à base de polychlorure de vinyle.

Les résultats de ces tests mettent en évidence les performances thermiques du revêtement thermiquement isolant antistatique selon l'invention par rapport aux peintures actuellement utilisées dans l'industrie aéronautique et spatiale qui se dégradent à partir de 180°C et ne peuvent pas protéger les protections thermiques soumises à de fortes agressions thermiques, par exemple les protections thermiques largement utilisées sur les zones de protubérance des fusées. En outre, ces tests ont permis d'observer qu'après exposition à de fortes agressions thermiques, le revêtement antistatique selon l'invention se carbonise à des températures très proches des températures de début de carbonisation des protections thermiques qu'il recouvre. De ce fait, cette carbonisation assure l'écoulement correct des charges.

Par conséquent, le revêtement selon l'invention peut être utilisé dans l'industrie spatiale, pour faciliter l'écoulement des charges électrostatiques sur la surface externe des engins spatiaux, et notamment des lanceurs, et les protéger ainsi des phénomènes de décharges électriques, que ce soit au sol ou en vol.

Les revêtements selon l'invention peuvent également être employés dans tout autre secteur industriel dans lequel la survenue de décharges électriques est susceptible de mettre en danger les équipements et le personnel.

## Revendications

1. Composition antistatique thermiquement isolante comprenant un élastomère silicone, une charge antistatique comprenant au moins deux composés minéraux de densités différentes, au moins un des composés minéraux étant électriquement conducteur et les autres composés minéraux permettant d'ajuster la résistivité surfacique de la composition à une valeur déterminée, et un agent d'homogénéisation permettant d'homogénéiser la répartition des au moins deux composés minéraux au sein de la charge antistatique, **caractérisée en ce que** la charge antistatique comprend 14 parties en poids (+ ou - 3%) d'un premier composé minéral et 16 parties en poids (+ ou - 3%) d'un second composé minéral mélangées de manière homogène dans 20 parties (+ ou - 3%) en poids de l'agent d'homogénéisation et **en ce que** les premier et second composés minéraux sont choisis parmi les oxydes d'étain, les oxydes d'antimoine et leurs mélanges.

2. Composition antistatique thermiquement isolante comprenant un élastomère silicone, une charge antistatique comprenant au moins deux composés minéraux de densités différentes, au moins un des composés minéraux étant électriquement conducteur et les autres composés minéraux permettant d'ajuster la résistivité surfacique de la composition à une valeur déterminée, et un agent d'homogénéisation permettant d'homogénéiser la répartition des au moins deux composés minéraux au sein de la charge antistatique, **caractérisée en ce que** la charge antistatique comprend 140 parties en poids (+ ou - 3%) d'un premier composé minéral et 100 parties en poids (+ ou - 3%) d'un second composé minéral mélangées de manière homogène dans 350 parties en poids (+ ou - 3%) de l'agent d'homogénéisation et **en ce que** les premier et second composés minéraux sont choisis parmi les oxydes d'étain, les oxydes d'antimoine et leurs mélanges.

3. Composition antistatique thermiquement isolante selon la revendication 1 ou 2, **caractérisée en ce que** le premier composé minéral est de l'oxyde d'étain et le second composé minéral est de l'oxyde d'antimoine.

4. Composition antistatique thermiquement isolante selon l'une quelconque des revendications précédentes, **caractérisée en ce que** l'agent d'homogénéisation est de l'eau.

5. Composition antistatique thermiquement isolante selon l'une quelconque des revendications précédentes, **caractérisée en ce que** l'élastomère silicone est monocomposant et vulcanisant à température ambiante.

6. Composition antistatique thermiquement isolante selon l'une quelconque des revendications précédentes, **caractérisée en ce que** l'agent d'homogénéisation représente un quart du poids de la composition.

7. Composition antistatique thermiquement isolante selon l'une quelconque des revendications précédentes, **caractérisée en ce qu'**elle comprend 100 parties en poids (+ 1% ou - 3%) de l'élastomère silicone et 100 parties en poids (+ ou - 3%) de la charge antistatique.

8. Composition antistatique thermiquement isolante selon l'une quelconque des revendications précédentes, **caractérisée en ce qu'**elle comprend en outre un diluant apte à diminuer la viscosité de la composition.

9. Composition antistatique thermiquement isolante selon la revendication précédente, **caractérisée en ce que** le diluant est le n-heptane.

10. Revêtement de protection électrostatique thermiquement isolant, **caractérisé en ce qu'**il est obtenu par application et séchage sur un support d'au moins une couche d'une composition telle que définie dans l'une quelconque des revendications 1 à 9.

11. Revêtement selon la revendication précédente, **caractérisé en ce qu'**il présente une résistivité surfacique comprise entre 10⁵ et 10⁹ Ω/carré.

12. Utilisation d'un revêtement selon l'une quelconque des revendications 10 à 11 sur la surface d'une structure destinée à être soumise à une agression thermique, de manière à ce que le revêtement facilite l'écoulement des charges électrostatiques sur la surface de ladite structure.

13. Procédé de réalisation d'une composition thermiquement isolante pour revêtement antistatique, **caractérisé en ce qu'**il comprend les étapes suivantes :
- formation d'au moins une charge antistatique apte à écouler des charges électriques et destinée à être incorporée dans un élastomère silicone pour former une composition antistatique thermiquement isolante selon l'une quelconque des revendications 1 à 9, ladite étape de formation comprenant une étape de mélange homogène d'au moins deux composés minéraux de densités différentes dans des proportions déterminées, au moins un desdits composés minéraux étant électriquement conducteur, le mélange étant effectué dans un agent d'homogénéisation apte à disperser de manière homogène lesdits au moins deux composés minéraux au sein de la charge antistatique,
- incorporation de manière homogène de ladite au moins une charge antistatique formée dans un élastomère silicone.

14. Procédé de réalisation d'une composition thermiquement isolante pour revêtement antistatique selon la revendication 13, dans lequel les composés minéraux sont choisis parmi les oxydes d'étain, les oxydes d'antimoine et leurs mélanges.

15. Procédé de réalisation d'une composition thermiquement isolante pour revêtement antistatique selon la revendication 13 ou 14, dans lequel l'agent d'homogénéisation est de l'eau.

16. Procédé de réalisation d'une composition thermiquement isolante pour revêtement antistatique selon la revendication 13, dans lequel l'élastomère silicone est monocomposant et vulcanisant à température ambiante.

17. Procédé de réalisation d'un revêtement thermiquement isolant de protection antistatique sur un support, **caractérisé en ce qu'**il comprend les étapes suivantes :
- application d'au moins une couche d'une composition thermiquement isolante pour revêtement antistatique sur la surface du support à protéger, ladite composition étant réalisée selon l'une quelconque des revendications 13 à 16,
- séchage de ladite au moins une couche.

18. Procédé de réalisation d'un revêtement thermiquement isolant de protection antistatique sur un support selon la revendication 17, **caractérisé en ce que** l'application de ladite au moins une couche sur le support et/ou le séchage de ladite au moins une couche est effectuée à température ambiante et sous une hygrométrie relative inférieure à 60%.

19. Procédé de réalisation d'un revêtement thermiquement isolant de protection antistatique sur un support selon la revendication 17 ou 18, **caractérisé en ce qu'**il comprend en outre, avant l'étape d'application, une étape d'ajout d'un diluant dans la composition de manière à abaisser la viscosité de la composition et faciliter son application sur le support.

20. Procédé de réalisation d'un revêtement thermiquement isolant de protection antistatique sur un support selon la revendication 19, **caractérisé en ce que** le diluant est le n-heptane.

21. Procédé de réalisation d'un revêtement thermiquement isolant de protection antistatique sur un support selon l'une quelconque des revendications 17 à 20, **caractérisé en ce que** le support est en un matériau électriquement non conducteur.

22. Procédé de réalisation d'un revêtement thermiquement isolant de protection antistatique sur un support selon l'une quelconque des revendications 17 à 21, **caractérisé en ce que** le support est en un élastomère silicone.

## Patentansprüche

1. Antistatische, thermisch isolierende Zusammensetzung, umfassend ein Silikon-Elastomer, einen antistatischen Zusatz, welcher wenigstens zwei mineralische Komponenten mit unterschiedlichen Dichten umfasst, wobei wenigstens eine der mineralischen Komponenten elektrisch leitend ist und die anderen mineralischen Komponenten es ermöglichen, den Oberflächenwiderstand der Zusammensetzung auf einen bestimmten Wert einzustellen, und ein Homogenisierungsmittel, welches es ermöglicht, die Verteilung der wenigstens zwei mineralischen Komponenten in dem antistatischen Zusatz zu homogenisieren, **dadurch gekennzeichnet, dass** der antistatische Zusatz 14 Gewichtsanteile (plus oder minus 3 %) von einer ersten mineralischen Komponente und 16 Gewichtsanteile (plus oder minus 3 %) von einer zweiten mineralischen Komponente umfasst, die in homogener Weise in 20 Gewichtsanteilen (plus oder minus 3 %) von dem Homogenisierungsmittel gemischt sind, und **dadurch, dass** die erste und die zweite mineralische Komponente ausgewählt sind aus den Zinnoxiden, den Antimonoxiden und deren Mischungen.

2. Antistatische, thermisch isolierende Zusammensetzung, umfassend ein Silikon-Elastomer, einen antistatischen Zusatz, welcher wenigstens zwei mineralische Komponenten mit unterschiedlichen Dichten umfasst, wobei wenigstens eine der mineralischen Komponenten elektrisch leitend ist und die anderen mineralischen Komponenten es ermöglichen, den Oberflächenwiderstand der Zusammensetzung auf einen bestimmten Wert einzustellen, und ein Homogenisierungsmittel, welches es ermöglicht, die Verteilung der wenigstens zwei mineralischen Komponenten in dem antistatischen Zusatz zu homogenisieren, **dadurch gekennzeichnet, dass** der antistatische Zusatz 140 Gewichtsanteile (plus oder minus 3 %) einer ersten mineralischen Komponente und 100 Gewichtsanteile (plus oder minus 3 %) einer zweiten mineralischen Komponente umfasst, die in homogener Weise in 350 Gewichtsanteilen (plus oder minus 3 %) von dem Homogenisierungsmittel gemischt sind, und **dadurch, dass** die erste und zweite mineralische Komponente ausgewählt sind aus den Zinnoxiden, den Antimonoxiden und deren Mischungen.

3. Antistatische, thermisch isolierende Zusammensetzung nach Anspruch 1 oder 2, **dadurch gekennzeichnet, dass** die erste mineralische Komponente Zinnoxid ist und die zweite mineralische Komponente Antimonoxid ist.

4. Antistatische, thermisch isolierende Zusammensetzung nach einem der vorhergehenden Ansprüche, **dadurch gekennzeichnet, dass** das Homogenisierungsmittel Wasser ist.

5. Antistatische, thermisch Isolierende Zusammensetzung nach einem der vorhergehenden Anspruche, **dadurch gekennzeichnet, dass** das Silikon-Elastomer einkomponentig ist und bei Raumtemperatur vulkanisiert.

6. Antistatische, thermisch isolierende Zusammensetzung nach einem der vorhergehenden Ansprüche, **dadurch gekennzeichnet, dass** das Homogenisierungsmittel einen Viertel des Gewichts der Zusammensetzung darstellt.

7. Antistatische, thermisch isolierende Zusammensetzung nach einem der vorhergehenden Anspruche, **dadurch gekennzeichnet, dass** sie 100 Gewichtsanteile (plus 1 % oder minus 3 %) von dem Silikon-Elastomer und 100 Gewichtsanteile (plus oder minus 3 %) von dem antistatischen Zusatz umfasst.

8. Antistatische, thermisch isolierende Zusammensetzung nach einem der vorhergehenden Ansprüche, **dadurch gekennzeichnet, dass** sie weiterhin einen Verdünner umfasst, der dazu geeignet ist, die Viskosität der Zusammensetzung zu reduzieren.

9. Antistatische, thermisch isolierende Zusammensetzung nach dem vorhergehenden Anspruch, **dadurch gekennzeichnet, dass** der Verdünner n-Heptan ist.

10. Thermisch isolierende ESD-Schutz-Beschichtung, **dadurch gekennzeichnet, dass** sie erhalten wird, indem auf einen Träger wenigstens eine Schicht aus einer Zusammensetzung, wie sie in einem der Ansprüche 1 bis 9 definiert ist, aufgetragen und getrocknet wird.

11. Beschichtung nach dem vorhergehenden Anspruch, **dadurch gekennzeichnet, dass** sie einen Oberflächenwiderstand aufweist, der zwischen 10⁵ und 10⁹ Ω/□ liegt.

12. Verwendung einer Beschichtung nach einem der Ansprüche 10 bis 11 auf der Oberfläche einer Struktur, die dazu bestimmt ist, thermisch abgegriffen zu werden, so dass die Beschichtung das Ableiten elektrostatischer Ladungen auf der Oberfläche der Struktur erleichtert.

13. Verfahren zur Herstellung einer thermisch isolierenden Zusammensetzung für eine antistatische Beschichtung, **dadurch gekennzeichnet, dass** es die folgenden Schritte umfasst:
- Herstellung wenigstens eines antistatischen Zusatzes, der dazu geeignet ist, elektrische Ladungen abzuleiten und dazu bestimmt ist, in ein Silikon-Elastomer eingebracht zu werden, um eine thermisch isolierende, antistatische Zusammensetzung nach einem der Ansprüche 1 bis 9 zu bilden, wobei der Schritt der Herstellung einen Schritt der homogenen Mischung von den wenigstens zwei mineralischen Komponenten mit unterschiedlichen Dichten in vorbestimmten Proportionen umfasst, wobei wenigstens eine der mineralischen Komponenten elektrisch leitend ist, wobei die Mischung in einem Homogenisierungsmittel durchgeführt wird, das dazu geeignet ist, die wenigstens zwei mineralischen Komponenten in dem antistatischen Zusatz homogen zu verteilen,
- Einbringen von dem hergestellten, wenigstens einen antistatischen Zusatz auf homogene Weise in ein Silikon-Elastomer.

14. Verfahren zur Herstellung einer thermisch isolierenden Zusammensetzung für eine antistatische Beschichtung nach Anspruch 13, wobei die mineralischen Komponenten ausgewählt sind aus den Zinnoxiden, den Antimonoxiden und deren Mischungen.

15. Verfahren zur Herstellung einer thermisch isolierenden Zusammensetzung für eine antistatische Beschichtung nach Anspruch 13 oder 14, wobei das Homogenisierungsmittel Wasser ist.

16. Verfahren zur Herstellung einer thermisch isolierenden Zusammensetzung für eine antistatische Beschichtung nach Anspruch 13, wobei das Silikon-Elastomer einkomponentig ist und bei Raumtemperatur vulkanisiert.

17. Verfahren zur Herstellung einer thermisch isolierenden ESD-Schutz-Beschichtung auf einem Träger, **dadurch gekennzeichnet, dass** es die folgenden Schritte umfasst:
- Auftragen wenigstens einer Schicht einer thermisch isolierenden Zusammensetzung für eine antistatische Beschichtung auf die Oberfläche des zu schützenden Trägers, wobei die Zusammensetzung nach einem der Ansprüche 13 bis 16 hergestellt wird,
- Trocknen der wenigstens einen Schicht.

18. Verfahren zur Herstellung einer thermisch isolierenden ESD-Schutz-Beschichtung auf einem Träger nach Anspruch 17, **dadurch gekennzeichnet, dass** das Auftragen der wenigstens einen Schicht auf den Träger oder/und das Trocknen der wenigstens einen Schicht bei Raumtemperatur und unter einer relativen Luftfeuchtigkeit von weniger als 60 % durchgeführt wird.

19. Verfahren zur Herstellung einer thermisch isolierenden ESD-Schutz-Beschichtung auf einem Träger nach Anspruch 17 oder 18, **dadurch gekennzeichnet, dass** es weiterhin vor dem Schritt des Auftragens einen Schritt des Hinzufügens von einem Verdünner zu der Zusammensetzung umfasst, so dass die Viskosität der Zusammensetzung reduziert und ihr Auftrag auf den Träger erleichtert wird.

20. Verfahren zur Herstellung einer thermisch isolierenden ESD-Schutz-Beschichtung auf einem Träger nach Anspruch 19, **dadurch gekennzeichnet, dass** der Verdünner n-Heptan ist.

21. Verfahren zur Herstellung einer thermisch isolierenden ESD-Schutz-Beschichtung auf einem Träger nach einem der Ansprüche 17 bis 20, **dadurch gekennzeichnet, dass** der Träger aus einem elektrisch nicht leitenden Material besteht.

22. Verfahren zur Herstellung einer thermisch isolierenden ESD-Schutz-Beschichtung auf einem Träger nach einem der Ansprüche 17 bis 21, **dadurch gekennzeichnet, dass** der Träger aus einem Silikon-Elastomer besteht.

## Claims

1. Heat-insulating anti-static composition comprising a silicone elastomer, an anti-static charge comprising at least two mineral compounds of different densities, at least one of the mineral compounds being electrically conducting and the other mineral compounds being suitable for adjusting the surface resistivity of the composition to a defined value, and a homogenising agent suitable for homogenising the distribution of the at least two mineral compounds in the anti-static charge, **characterised in that** the anti-static charge comprises 14 parts by weight (+ or - 3%) of a first mineral compound and 16 parts by weight (+ or - 3%) of a second mineral compound mixed homogeneously in 20 parts (+ or - 3%) by weight of the homogenising agent and **in that** the first and second mineral compounds are chosen from tin oxides, antimony oxides and mixtures thereof.

2. Heat-insulating anti-static composition comprising a silicone elastomer, an anti-static charge comprising at least two mineral compounds of different densities, at least one of the mineral compounds being electrically conducting and the other mineral compounds being suitable for adjusting the surface resistivity of the composition to a defined value, and a homogenising agent suitable for homogenising the distribution of the at least two mineral compounds in the anti-static charge, **characterised in that** the anti-static charge comprises 140 parts by weight (+ or - 3%) of a first mineral compound and 100 parts by weight (+ or - 3%) of a second mineral compound mixed homogeneously in 350 parts (+ or - 3%) by weight of the homogenising agent and **in that** the first and second mineral compounds are chosen from tin oxides, antimony oxides and mixtures thereof.

3. Heat-insulating anti-static composition according to claim 1 or 2, **characterised in that** the first mineral compound is tin oxide and the second mineral compound is antimony oxide.

4. Heat-insulating anti-static composition according to any one of the above claims, **characterised in that** the homogenising agent is water.

5. Heat-insulating anti-static composition according to any one of the above claims, **characterised in that** the silicone elastomer is monocomponent and vulcanising at ambient temperature.

6. Heat-insulating anti-static composition according to any one of the above claims, **characterised in that** the homogenising agent represents one quarter of the weight of the composition.

7. Heat-insulating anti-static composition according to any one of the above claims, **characterised in that** it comprises 100 parts by weight (+ 1% or - 3%) of the silicone elastomer and 100 parts by weight (+ or - 3%) of the anti-static charge.

8. Heat-insulating anti-static composition according to any one of the above claims, **characterised in that** it further comprises a diluent suitable for reducing the viscosity of the composition.

9. Heat-insulating anti-static composition according to the preceding claim, **characterised in that** the diluent is n-heptane.

10. Heat-insulating electrostatic protective coating, **characterised in that** it is obtained by applying and drying on a substrate at least one layer of a composition as defined in any one of claims 1 to 9.

11. Coating according to the preceding claim, **characterised in that** it has a surface resistivity between 10⁵ and 10⁹ Ω/squared.

12. Use of a coating according to any one of claims 10 to 11 on the surface of a structure intended to be subjected to a thermal shock, such that the coating facilitates the flow of electrostatic charges on the surface of said structure.

13. Method for producing a heat-insulating composition for an anti-static coating, **characterised in that** it comprises the following steps:
- forming at least one anti-static charge suitable for the flow of electric charges and intended to be incorporated in a silicone elastomer to form a heat-insulating anti-static composition according to any one of claims 1 to 9, said forming step comprising a step for the homogeneous mixing of at least two mineral compounds of different densities in defined proportions, at least one of said mineral compounds being electrically conducting, the mixing being performed in a homogenising agent suitable for homogeneously dispersing said at least two mineral compounds in the anti-static charge,
- homogeneously incorporating the formed at least one anti-static charge in a silicone elastomer.

14. Method for producing a heat-insulating composition for an anti-static coating according to claim 13, wherein the mineral compounds are chosen from tin oxides, antimony oxides and mixtures thereof.

15. Method for producing a heat-insulating composition for an anti-static coating according to claim 13 or 14, wherein the homogenising agent is water.

16. Method for producing a heat-insulating composition according to claim 13, wherein the silicone elastomer is monocomponent and vulcanising at ambient temperature.

17. Method for producing a heat-insulating anti-static protective coating on a substrate, **characterised in that** it comprises the following steps:
- applying at least one layer of a heat-insulating anti-static coating composition on the surface of the substrate to be protected, said composition being produced according to any one of claims 13 to 16,
- drying said at least one layer.

18. Method for producing a heat-insulating anti-static protective coating on a substrate according to claim 17, **characterised in that** the application step of at least one layer onto the substrate and/or the drying step of at least one layer is realised at ambient temperature and at a relative humidity less than 60%.

19. Method for producing a heat-insulating anti-static protective coating on a substrate according to claim 17 or 18, **characterised in that** it further comprises, before the application step, a step for adding a diluent into the composition so as to lower the viscosity of the composition and facilitate the application thereof on the substrate.

20. Method for producing a heat-insulating anti-static protective coating on a substrate according to claim 19, **characterised in that** the diluent is n-heptane.

21. Method for producing a heat-insulating anti-static protective coating on a substrate according to any one of claims 17 to 20, **characterised in that** the substrate is made of a non-electrically conducting material.

22. Method for producing a heat-insulating anti-static protective coating on a substrate according to any one of claims 17 to 21, **characterised in that** the substrate is made of a silicone elastomer.
